# EUROPÄISCHE PATENTSCHRIFT

(11) **EP 0 982 018 B1**
(45) Veröffentlichungstag und Bekanntmachung des Hinweises auf die Patenterteilung: **07.06.2006**
(21) Anmeldenummer: 99100434.2
(22) Anmeldetag: 11.01.1999
(51) Int. Cl.: A61G 7/012

(54) **Hubvorrichtung vorzugsweise für die Höhenverstellung eines Kranken- oder Pflegebetts**
Lifting device preferably for the height adjustment for patient beds or care beds
Dispositif de levage de préfèrence pour le réglage en hauteur de lits de malades ou de soins

(30) Priorität: 24.08.1998 DE 19838326
(43) Veröffentlichungstag der Anmeldung: 01.03.2000
(73) Patentinhaber: Linet Spol. S.R.O., 27401 Slany (CZ)
(72) Erfinder: Kolar, Vladimir, Dipl.-Ing., 27401 Slany (CZ); Frolik, Zbynek, Dipl.-Ing., 16000 Praha 6 (CZ)
(74) Vertreter: Basfeld, Rainer

(56) Entgegenhaltungen:
- BE-A- 899 228
- CH-A- 670 899
- DE-A- 19 528 179
- DE-U- 8 523 224
- US-A- 1 700 741

## Beschreibung

Die vorliegende Erfindung betrifft eine Hubvorrichtung vorzugsweise für die Höhenverstellung eines Kranken- oder Pflegebetts mit den Merkmalen des Oberbegriffs des Anspruchs 1.

Hubvorrichtungen vorzugsweise für die Höhenverstellung eines Kranken- oder Pflegebetts sind aus dem Stand der Technik bekannt. Beispielsweise beschreibt die DE 195 28 179 A1 eine derartige Hubvorrichtung, bei der man, wenn der Hubantrieb einen geringeren Hubweg zurücklegt für die teleskopierende Hubsäule insgesamt einen größeren Hubweg erreichen kann, beispielsweise den doppelten Hubweg desjenigen, den der Hubantrieb zurücklegt. Diese bekannte Hubvorrichtung hat jedoch den Nachteil, daß der Hubantrieb über einen Hubwagen, der einen Querträger umfaßt, an dem inneren Hubzylinder angreift. Zu Beginn des Hochfahrens wird also zunächst nur der innere Hubzylinder angehoben. Dieser innere Hubzylinder ist über Ausfahr- und Begrenzungsanschläge mit dem mittleren Hubzylinder gekoppelt, so daß der mittlere Hubzylinder erst dann mitgenommen wird, wenn die Position erreicht ist, bei der die jeweiligen Anschläge aneinanderliegen. Da sich die Konstruktion eines Hubwagens mit Querträger bedient wird zudem ein relativ großer Querschnitt für den inneren Hubzylinder und die teleskopierende Hubsäulenanordnung insgesamt benötigt. Um das bekannte Krankenbett aus der angehobenen Position wieder herunterzufahren, muß eine in die Hubspindel eingreifende Kupplungsmutter ausgekuppelt werden. Im ausgekuppelten Zustand kann das Bett dann von Hand abgesenkt werden, wobei um ein sanftes Herunterfahren des Bettes zu erreichen zusätzlich noch ein Dämpfungsorgan in Form einer Gasdruckfeder vorgesehen ist.

Eine weitere Hubvorrichtung, nämlich eine Hubvorrichtung für ein Kamerastativ, ist aus der Druckschrift mit der Veröffentlichungsnummer CH 670 899 A5 bekannt. Diese Hubvorrichtung weist die Merkmale des Oberbegriffs des Anspruchs 1 auf und weist mehrere Hubspindeln auf, die über Spindelmuttern jeweils mit dem mittleren Hubzylinder zusammen wirken. Ein Elektromotor treibt die Hubspindeln unter Zwischenschaltung von Zahnriemen an und ist in dem äußeren Hubzylinder beim Einfahren der Hubsäule in den inneren Hubzylinder eintauchend angeordnet. Ferner sind mehrere erste und mehrere zweite Zylinderglieder vorgesehen, welche die Bewegungskopplung der drei Hubzylinder beim Ein- und Ausfahren der Hubsäule bewirken. Die Hubvorrichtung gemäß der letztgenannten Druckschrift ist insgesamt sehr aufwändig gestaltet. Eine Vielzahl von sich bewegenden Spindeln, Zuggliedern und Zahnriemen sind notwendig. Fällt eines dieser Teile aus, kann die Funktion der Hubsäule erheblich beeinträchtigt werden. Hier setzt die vorliegende Erfindung an.

Die Aufgabe der vorliegenden Erfindung besteht darin, eine Hubvorrichtung vorzugsweise für die Höhenverstellung eines Kranken- oder Pflegebetts der eingangs genannten Gattung konstruktiv zu verbessern, so daß die teleskopierende Hubsäulenanordung vorzugsweise so ausgebildet ist, daß sie einen geringeren Querschnitt aufweist und die Hubvorrichtung insgesamt einfacher konstruiert und robuster in der Anwendung ist.

Diese Aufgabe wird durch eine Hubvorrichtung nach Anspruch 1 gelöst.

Die Lösung dieser Aufgabe liefert eine erfindungsgemäße Hubvorrichtung vorzugsweise für die Höhenverstellung eines Kranken- oder Pflegebetts der eingangs genannten Gattung mit den kennzeichnenden Merkmalen des Hauptanspruchs. Erfindungsgemäß ist vorgesehen, daß wenigstens ein weiteres Zugglied vorhanden ist, das an seinem einen Ende an dem äußeren Hubzylinder festgelegt und das an dem anderen Ende an dem inneren Hubzylinder festgelegt ist und das über wenigstens eine Umlenkrolle oder dergleichen um etwa 180° umgelenkt ist, so daß bei Abwärtsbewegung des Hubantriebs auf den inneren Hubzylinder über das Zugglied eine Zugkraft ausgeübt wird, wobei gleichzeitig bei der Abwärtsbewegung der Hubantrieb eine Kraft auf den mittleren Hubzylinder ausübt.

Bei der erfindungsgemäßen Lösung greift also der Hubantrieb bei der Abwärtsbewegung und bei der Aufwärtsbewegung der teleskopierenden Hubsäulenanordnung an dem mittleren Hubzylinder an. Ein Absenken des Kranken- oder Pflegebetts von Hand ist also nicht erforderlich ebenso wenig wie ein Auskuppeln des Hubantriebs zu diesem Zweck. Über den Hubantrieb wird der mittlere Hubzylinder bereits zu Beginn der Höhenverstellung mit ausgefahren, wobei über das erste Zugglied beim Hochfahren der innere Hubzylinder weiter aus dem mittleren Hubzylinder herausgezogen wird, so daß der innere Hubzylinder in jeder Hubposition vorzugsweise etwa den doppelten Hubweg zurücklegt wie der von dem Hubantrieb angetriebene mittlere Hubzylinder. Auch das Absenken der erfindungsgemäßen Hubvorrichtung erfolgt nicht kraftlos, sondern wiederum über den am mittleren Hubzylinder angreifenden Hubantrieb, wobei über das weitere Zugglied bei der Abwärtsbewegung wiederum an dem inneren Hubzylinder angegriffen wird und dieser dann mit nach unten gezogen wird und in den mittleren Hubzylinder eingefahren wird, wobei letzterer wiederum in den äußeren Hubzylinder eingefahren wird. Das Absenken der teleskopierenden Hubsäulenanordnung erfolgt also gemäß der Erfindung im Prinzip in einem Bewegungsablauf analog zum Hochfahren.

Erfindungsgemäß werden sowohl das erste Zugglied als auch das weitere Zugglied vorzugsweise nur über jeweils eine Umlenkrolle umgelenkt. Die Umlenkrolle für das erste Zugglied ist so dimensioniert, daß sie in dem Querschnitt des inneren Hubzylinders untergebracht ist, so daß die Hubsäulenanordnung insgesamt mit relativ kleinem Querschnitt gebaut werden kann. Die einzelnen Hubzylinder haben vorzugsweise einen runden Querschnitt. Die zweite Umlenkrolle, die für das weitere Zugglied benötigt wird kann beispielsweise einen im Vergleich zu der Hubsäulenanordnung insgesamt relativ geringen Durchmesser aufweisen, so daß sie bei kompakter Bauweise ohne weiteres in der Hubsäulenanordnung untergebracht werden kann. Vorzugsweise bringt man die Umlenkrolle für das zweite Zugglied außermittig nahe des Umfangbereichs des mittleren Hubzylinders vorzugsweise in dessen unterem Endbereich oder unter diesem an.

Das erste Zugglied ist vorzugsweise eine Kette oder dergleichen, die über die Umlenkrolle gleiten kann. Das zweite Zugglied ist vorzugsweise ein Seilzug oder dergleichen. Der Hubantrieb ist eine Hubspindel, die an dem mittleren Hubzylinder angreift.

Dieser Hubspindel ist eine Spindelmutter zugeordnet, die im unteren Endbereich an dem mittleren Hubzylinder befestigt ist.

Gemäß einer bevorzugten Weiterbildung der Erfindung ist weiterhin vorgesehen, daß das erste Zugglied im unteren Endbereich an einem Befestigungspunkt an dem inneren Hubzylinder befestigt ist, wobei dieses erste Zugglied über eine Umlenkrolle geführt und dort um etwa 180° umgelenkt ist und an seinem anderen Ende dieses erste Zugglied vorzugsweise an einer Stange festgelegt ist, die mit dem äußeren Hubzylinder fest verbunden ist. Die Umlenkrolle für das erste Zugglied ist an dem mittleren Hubzylinder befestigt und fährt bereits zu Beginn der Hubbewegung mit dem mittleren Hubzylinder hoch. Die Umlenkrolle über die das zweite Zugglied geführt ist, ist vorzugsweise ebenfalls an dem mittleren Hubzylinder befestigt. Diese Umlenkrolle für das zweite Zugglied ist vorzugsweise im unteren Endbereich an dem mittleren Hubzylinder befestigt.

Die Unteransprüche betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand eines Ausführungsbeispiels unter Bezugnahme auf die beiliegenden Zeichnungen näher beschrieben. Dabei zeigen
- Fig. 1: einen Vertikalschnitt durch eine erfindungsgemäße Hubsäule für ein Kranken- oder Pflegebett;
- Fig. 2: einen Querschnitt durch die Hubsäule entlang der Linie II-II von Fig. 1;
- Fig. 3a: eine schematisch vereinfachte Längsschnittdarstellung durch eine Hubsäule gemäß der Erfindung in einer unteren Hubposition;
- Fig. 3b: eine schematisch vereinfachte Ansicht einer Hubsäule gemäß der Erfindung ähnlich wie in Fig. 3a, jedoch in einer mittleren Hubposition;
- Fig. 3c: eine entsprechende schematisch vereinfachte Schnittdarstellung einer Hubsäule ähnlich wie in Fig. 3a und 3b, jedoch in einer oberen Hubposition.

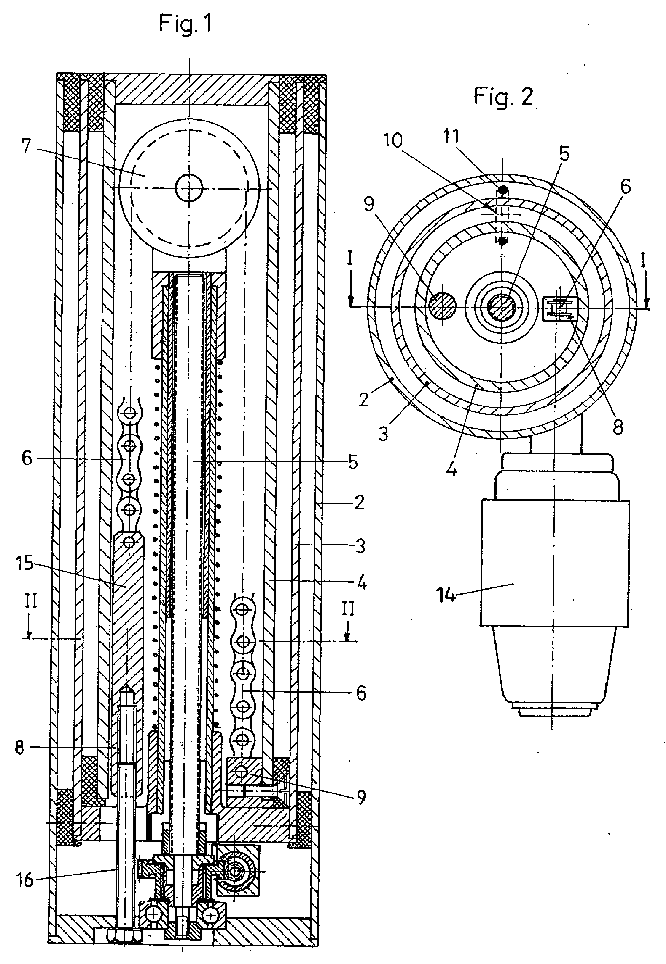

Zunächst wird auf die Fig. 1 und 2 Bezug genommen. Die erfindungsgemäße Hubsäule ist teleskopierend und wird vorzugsweise für ein Kranken- oder Pflegebett für dessen Höhenverstellung eingesetzt. Die Anwendung ist jedoch nicht unbedingt auf diesen Anwendungszweck beschränkt.

Wie man erkennen kann, umfaßt eine erfindungsgemäße teleskopierende Hubsäule einen äußeren Hubzylinder 2 einen konzentrisch in diesem gehaltenen und axial verschiebbaren aus der Position gemäß Fig. 1 nach oben ausfahrbaren mittleren Hubzylinder 3 sowie einen weiteren konzentrisch in dem mittleren Hubzylinder 3 gehaltenen und in diesem axial verschiebbar geführten inneren Hubzylinder 4, der wiederum aus dem mittleren Hubzylinder aus der Position gemäß Fig. 1 nach oben ausfahrbar ist, so daß sich eine teleskopierende Anordnung mit den 3 Hubzylindern, nämlich dem äußeren Hubzylinder 2, dem mittleren Hubzylinder 3 und dem inneren Hubzylinder 4 ergibt.

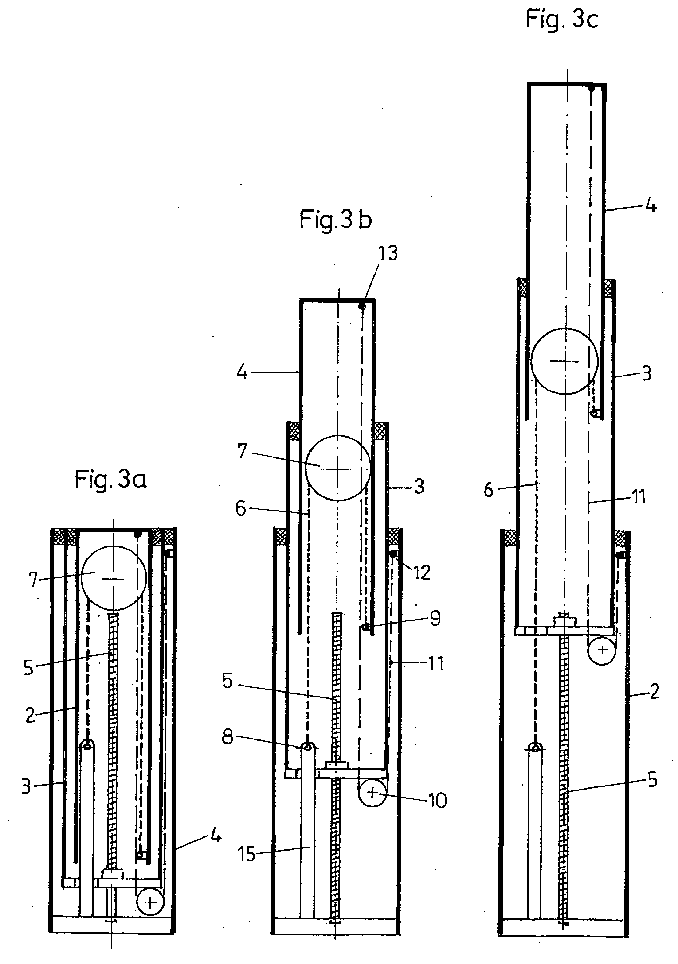

Der Hubantrieb, der dafür vorgesehen ist, den mittleren Hubzylinder 3 aus dem äußeren Hubzylinder 2 herauszufahren, wird gebildet über eine in dem Ausführungsbeispiel mittig angeordnete Hubspindel 5, die beispielsweise von einem in Fig. 2 erkennbaren Elektromotor 14 angetrieben wird. Diese Hubspindel greift im unteren Bereich an dem mittleren Hubzylinder 3 an, wirkt dabei mit einer Spindelmutter zusammen und fährt den mittleren Hubzylinder 3 bei Drehung in einer Antriebsrichtung nach oben hinaus in eine Position, wie sie beispielsweise in Fig. 3b erkennbar ist.

Um bei dem Herausfahren des mittleren Hubzylinders 3 aus dem äußeren Hubzylinder 2 durch Betätigung des Spindelantriebs der Hubspindel 5 auch ein Herausfahren des inneren Hubzylinders 4 zu erzielen, ist ein Zugglied in Form einer Kette 6 vorgesehen, die einerseits im unteren Bereich an dem inneren Hubzylinder 4 innenseitig befestigt ist und zwar an dem Befestigungspunkt 9, der in Fig. 1 und auch in Fig. 3b erkennbar ist. Diese Kette 6 wird von dort ausgehend über eine weiter oben gelegene Umlenkrolle 7 geführt und dort um 180° umgelenkt und ist dann an ihrem anderen unteren Ende an dem Befestigungspunkt 8, der in Fig. 3b und auch in Fig. 1 erkennbar ist, festgelegt und zwar derart, das dieses andere untere Ende der Kette 6 zum Beispiel über eine Stange 15 und einen Schraubbolzen 16 im unteren Endbereich an dem äußeren Hubzylinder 2 festgelegt ist. Dadurch wird dieses Ende der Kette 6 mittels der Stange 15 festgehalten, wenn bei Betätigung der Hubspindel 5 der mittlere Hubzylinder 3 nach oben herausgefahren wird. Das andere Ende der Kette 6, das an dem Befestigungspunkt 9 an dem inneren Hubzylinder 4 festgelegt ist, wird aber mit diesem inneren Hubzylinder 4 herausgefahren. Da gleichzeitig mit dem mittleren Hubzylinder 3 auch die Umlenkrolle 7 von der Hubspindel 5 nach oben herausgefahren wird, gleitet die an ihrem anderen Ende am Befestigungspunkt 8 festgehaltene Kette 6 dabei über die Umlenkrolle 7 und zieht, da die Gesamtlänge der Kette 6 ja festliegt, das an dem Befestigungspunkt 9 an dem inneren Hubzylinder 4 festgelegte Ende nach oben, wodurch der innere Hubzylinder 4 aus dem mittleren Hubzylinder 3 herausgefahren wird, wie man dies auch in Fig. 3b erkennen kann. Man sieht, daß ausgehend von der Ausgangsstellung gemäß Fig. 3a der mittlere Hubzylinder 3 einen gewissen Hubweg gegenüber dem äußeren Hubzylinder 2 zurückgelegt hat und daß gleichzeitig um den entsprechenden Hubweg der innere Hubzylinder 4 aus dem mittleren Hubzylinder 3 herausgefahren ist. Wenn man nun weiter vergleicht mit der Darstellung gemäß Fig. 3c, dann erkennt man, daß dann der mittlere Hubzylinder 3 nahezu seine maximale Hubposition erreicht hat, da sich die Spindelmutter am oberen Ende der Hubspindel 5 befindet und daß dann die Kette 6 nahezu vollständig über die Umlenkrolle 7 geglitten ist, so daß das an dem Befestigungspunkt 9 festgelegte Ende der Kette 6, das mit dem inneren Hubzylinder 4 verbunden ist bis nahe an die Umlenkrolle 7 herangelangt ist, wobei in dieser Position auch der innere Hubzylinder 4 einen entsprechenden Hubweg gegenüber dem mittleren Hubzylinder 3 zurückgelegt hat. Man erzielt also auf diese Weise bei Betätigung der Hubspindel 5 bezogen auf das obere Ende des inneren Hubzylinders 4 betrachtet im Prinzip jeweils etwa den doppelten Hubweg verglichen mit dem einfachen Hubweg, den der mittlere Hubzylinder 3 gegenüber dem äußeren Hubzylinder 2 zurücklegt.

Es wird erneut Bezug genommen auf die Fig. 1 und 2. Die zuvor beschriebene Kinematik wird wirksam beim Ausfahren der Hubzylinder 3 und 4 aus dem äußeren Hubzylinder 2, das heißt wenn die Hubspindel 5 den mittleren Hubzylinder 3 und den inneren Hubzylinder 4 nach oben fährt, wird die über die Umlenkrolle 7 geführte Kette 6 als Zugglied wirksam. Um nun beim Herunterfahren der teleskopierenden Hubsäulenanordnung beispielsweise aus der oberen Hubposition gemäß Fig. 3c oder der mittleren Hubposition gemäß Fig. 3b eine ausreichende Zugkraft auszuüben, die den inneren Hubzylinder 4 synchron mit nach unten fährt, ist ein weiteres Zugglied zum Beispiel in Form eines Seilzugs 11 vorgesehen, der ebenfalls über eine Umlenkrolle 10 geführt ist und um 180° dort umgelenkt ist, wie man aus den Fig. 3b in Verbindung mit Fig. 2 erkennen kann. Die Lage dieser zweiten unteren Umlenkrolle 10 ist, wie man in Fig. 2 sieht, außermittig im äußeren Bereich und zwar derart, daß die Umlenkrolle 10 in dem mittigen Vertikalschnitt gemäß Fig. 1 hinter der Hubspindel 5 liegt, so daß sie dort nicht erkennbar ist. Weiterhin liegt die untere Umlenkrolle 10 unter dem unteren Ende des mittleren Hubzylinders 3, wie man in Fig. 3b erkennen kann. Dieser Seilzug 11, der über diese untere Umlenkrolle 10 geführt ist, ist nun an seinem einen Ende an dem Befestigungspunkt 12, den man in Fig. 3b erkennt im oberen Bereich an dem äußeren Hubzylinder 2 befestigt. An seinem anderen Ende ist der Seilzug 11 nach Umlenkung an der Umlenkrolle 10 um 180° an dem oberen Ende im Innenbereich an dem in Fig. 3b erkennbaren Befestigungspunkt 13 an dem inneren Hubzylinder 4 befestigt. Wird nun bei umgekehrter Drehung der Hubspindel 5 der mittlere Hubzylinder 3 heruntergefahren, dann bewegt sich mit diesem die Umlenkrolle 10 nach unten und da die Länge des Seilzugs 11 festliegt und dieser an seinem einen Ende oben an dem äußeren Hubzylinder 2 festgelegt ist, zieht der Seilzug 11 an dem Befestigungspunkt 13 den inneren Hubzylinder 4 entsprechend dem Hub des mittleren Hubzylinders 3 nach unten. Die Bewegung der Umlenkrolle 10 mit dem mittleren Hubzylinder 3 beim Herunterfahren der teleskopierenden Hubsäulenanordnung ist durch Vergleich der Fig. 3c und 3b erkennbar. In Fig. 2 erkennt man, wie die Umlenkrolle 10 liegt, nämlich im Inneren des äußeren Hubzylinders 2 außermittig etwa im Randbereich und zwar unterhalb des mittleren Hubzylinders 3, deshalb ist die Umlenkrolle 10 in Fig. 2 gestrichelt eingezeichnet. Wie die Zeichnungen Fig. 1 und 2 zeigen, kann die Umlenkrolle 10 etwas kleiner sein als die Umlenkrolle 7, die mittig angeordnet ist und in dem Ausführungsbeispiel, wie man aus Fig. 1 erkennen kann, etwa den Querschnitt des innersten Hubzylinders 4 ausfüllt. Dies sind jedoch nur konstruktive Details, die ein Fachmann natürlich auch anders lösen kann, ohne die prinzipielle Funktionsweise der erfindungsgemäßen Hubsäulenanordnung zu beeinträchtigen.

## Patentansprüche

1. Hubvorrichtung, vorzugsweise für die Höhenverstellung eines Kranken- oder Pflegebetts, umfassend eine teleskopierende Hubsäule mit einem äußeren Hubzylinder (2), einem in diesem konzentrisch angeordneten ausfahrbaren mittleren Hubzylinder (3)und einem in diesem wiederum konzentrisch gehaltenen und axial ausfahrbarem inneren Hubzylinder (4),
mit einem Hubantrieb (5) für das Herausfahren des mittleren Hubzylinders (3) und des inneren Hubzylinders (4) aus dem äußeren Hubzylinder (2)
mit einem ersten Zugglied (6), das an seinem einen Ende im unteren Bereich an dem inneren Hubzylinder (4) festgelegt und das an seinem anderen Ende an dem äußeren Hubzylinder (2) festgelegt ist,
so daß bei Betätigung des Hubantriebs (5) der innere Hubzylinder (4) jeweils den doppelten Hubweg zurücklegt, wie der Hubantrieb (5),
mit wenigstens einem zweiten Zugglied (11), das an seinem einen Ende an dem äußeren Hubzylinder (2) festgelegt ist und das an seinem anderen Ende an dem inneren Hubzylinder (4) festgelegt ist, so daß bei Abwärtsbewegung des Hubantriebs (5) auf den inneren Hubzylinder (4) über das zweite Zugglied (11) eine Zugkraft ausgeübt wird, wobei gleichzeitig bei der Abwärtsbewegung der Hubantrieb (5) eine Kraft auf den mittleren Hubzylinder (3) ausübt, wobei der Hubantrieb (5) eine Hubspindel ist und dieser Hubspindel eine Spindelmutter zugeordnet ist, die im unteren Endbereich an dem mittleren Hubzylinder (3) befestigt ist,
**dadurch gekennzeichnet,**
**dass** das erste Zugglied (6) über wenigstens eine erste Umlenkrolle (7) umgelenkt ist, dass das zweite Zugglied (11) über wenigstens eine zweite Umlenkrolle (10) um etwa 180° umgelenkt ist,
**dass** die Hubspindel (5) bei einer eingefahrenen Hubsäule in dem inneren Hubzylinder (4) eintaucht
und **dass** die erste Umlenkrolle (7) für das erste Zugglied (6) mittig in dem inneren Hubzylinder (4) und oberhalb der Hubspindel (5) anbeordnet und an dem mittleren Hubzylinder (3) befestigt ist.

2. Hubvorrichtung nach Anspruch 1, **dadurch gekennzeichnet, daß** die zweite Umlenkrolle (10) über die das zweite Zugglied (11) geführt ist, an dem mittleren Hubzylinder (3) befestigt ist.

3. Hubvorrichtung nach einem der Ansprüche 1 oder 2, **dadurch gekennzeichnet, daß** die zweite Umlenkrolle (10) für das zweite Zugglied (11) im unteren Endbereich an dem mittleren Hubzylinder (3) befestigt ist.

4. Hubvorrichtung nach einem der Ansprüche 1 bis 3, **dadurch gekennzeichnet, daß** das zweite Zugglied (11) ein Seilzug oder dergleichen ist.

5. Hubvorrichtung nach einem der Ansprüche 1 bis 4, **dadurch gekennzeichnet, daß** das erstes Zugglied (6) im unteren Endbereich an einem Befestigungspunkt (9) an dem inneren Hubzylinder (4) befestigt ist, wobei dieses erste Zugglied (6) über die erste Umlenkrolle (7) geführt und dort um etwa 180° umgelenkt ist und an seinem anderen Ende dieses erste Zugglied (6) an einer Stange (15) festgelegt ist, die mit dem äußeren Hubzylinder (2) fest verbunden ist.

6. Hubvorrichtung vorzugsweise für ein Kranken- oder Pflegebett nach einem der Ansprüche 1 bis 5, **dadurch gekennzeichnet, daß** das erste Zugglied (6) eine Kette ist.

7. Hubvorrichtung nach einem der Ansprüche 1 bis 6, **dadurch gekennzeichnet, daß** die zweite Umlenkrolle (10) für das zweite Zugglied (11) außermittig nahe des Umfangbereichs des mittleren Hubzylinders (3) angeordnet ist.

## Claims

1. Lifting arrangement, preferably for the height adjustment of a hospital bed, comprising a telescopic lifting column having an outer lifting cylinder (2), a central, extensible lifting cylinder (3) arranged concentrically therein, and an inner, axially extensible lifting cylinder (4) arranged, in turn, concentrically in the central lifting cylinder,
having a lifting drive (5) for extending the central lifting cylinder (3) and the inner lifting cylinder (4) out of the outer lifting cylinder (2),
having a first pulling mechanism (6), which, at one end, is secured in the bottom region on the inner lifting cylinder (4) and, at its other end, is secured on the outer lifting cylinder (2),
with the result that, when the lifting drive (5) is actuated, the lifting distance covered by the inner lifting cylinder (4) is double that covered in each case by the lifting drive (5),
having at least a second pulling mechanism (11), which, at one end, is secured on the outer lifting cylinder (2) and, at its other end, is secured on the inner lifting cylinder (4), with the result that, when the lifting drive (5) is moved downwards, the inner lifting cylinder (4) is subjected to a tensile force via the second pulling mechanism (11), the central lifting cylinder (3) being subjected to a force by the lifting drive (5) at the same time as the latter is moved downwards, the lifting drive (5) being a lifting spindle and this lifting spindle being assigned a spindle nut which is fastened in the bottom end region on the central lifting cylinder (3),
**characterized**
**in that** the first pulling mechanism (6) is deflected over at least a first deflecting roller (7), in that the second pulling mechanism (11) is deflected by approximately 180° over at least a second deflecting roller (10),
**in that** the lifting spindle (5) penetrates into the inner lifting cylinder (4) when the lifting column is retracted,
and **in that** the first deflecting roller (7) for the first pulling mechanism (6) is arranged centrally in the inner lifting cylinder (4) and above the lifting spindle (5) and is fastened on the central lifting cylinder (3).

2. Lifting arrangement according to Claim 1, **characterized in that** the second deflecting roller (10), over which the second pulling mechanism (11) is guided, is fastened on the central lifting cylinder (3).

3. Lifting arrangement according to either of Claims 1 and 2, **characterized in that** the second deflecting roller (10) for the second pulling mechanism (11) is fastened in the bottom end region on the central lifting cylinder (3).

4. Lifting arrangement according to one of Claims 1 to 3, **characterized in that** the second pulling mechanism (11) is a cable pull or the like.

5. Lifting arrangement according to one of Claims 1 to 4, **characterized in that** the first pulling mechanism (6) is fastened in the bottom end region on the inner lifting cylinder (4) at a fastening point (9), this first pulling mechanism (6) being guided over the first deflecting roller (7) and being deflected there by approximately 180° and, at its other end, this first pulling mechanism (6) being secured on a rod (15) which is fixed to the outer lifting cylinder (2).

6. Lifting arrangement, preferably for a hospital bed, according to one of Claims 1 to 5, **characterized in that** the first pulling mechanism (6) is a chain.

7. Lifting arrangement according to one of Claims 1 to 6, **characterized in that** the second deflecting roller (10) for the second pulling mechanism (11) is arranged eccentrically in the vicinity of the circumferential region of the central lifting cylinder (3).

## Revendications

1. Dispositif de levage, de préférence pour le réglage en hauteur d'un lit de malade ou de soins, comportant une colonne télescopique de levage comprenant un vérin extérieur de levage (2), un vérin central de levage (3) pouvant sortir et disposé concentriquement dans celui-ci et un vérin intérieur de levage (4) maintenu à son tour concentriquement dans celui-ci et pouvant sortir axialement,
comportant une propulsion de levage (5) pour faire sortir le vérin central de levage (3) et le vérin intérieur de levage (4) du vérin extérieur de levage (2),
un premier élément de traction (6) qui est fixé par une de ses extrémités dans la zone inférieure du vérin intérieur de levage (4) et est fixé par son autre extrémité sur le vérin extérieur de levage (2),
de sorte qu'en cas d'actionnement de la propulsion de levage (5), le vérin intérieur de levage (4) parcourt respectivement le double de la course de levage de la propulsion de levage (5),
au moins un deuxième élément de traction (11) qui est fixé par une de ses extrémités sur le vérin extérieur de levage (2) et qui est fixé par son autre extrémité sur le vérin intérieur de levage (4), de sorte qu'en cas de mouvement vers le bas de la propulsion de levage (5), une force de traction est exercée sur le vérin intérieur de levage (4) par le deuxième élément de traction (11) tandis qu'en même temps, lors du mouvement vers le bas, la propulsion de levage (5) exerce une force sur le vérin central de levage (3), la propulsion de levage (5) étant une broche de levage et à cette broche de levage étant associé un écrou de levage qui est fixé dans la zone terminale inférieure du vérin central de levage (3),
**caractérisé en ce**
**que** le premier élément de traction (6) est dévié par au moins un premier cylindre d'inversion (7), que le deuxième élément de traction (11) est dévié par au moins un deuxième cylindre d'inversion (10) d'environ 180°,
**que** la broche de levage (5), lorsqu'une colonne de levage est rentrée, plonge dans le vérin intérieur de levage (4),
et **que** le premier cylindre d'inversion (7) pour le premier élément de traction (6) est disposé au centre du vérin intérieur de levage (4) et au dessus de la broche de levage (5) et est fixé sur le vérin central de levage (3).

2. Dispositif de levage selon la revendication 1, **caractérisé en ce que** le deuxième cylindre d'inversion (10) par lequel est guidé le deuxième élément de traction (11) est fixé sur le vérin central de levage (3).

3. Dispositif de levage selon l'une quelconque des revendications 1 ou 2, **caractérisé en ce que** le deuxième cylindre d'inversion (10) pour le deuxième élément de traction (11) est fixé dans la zone terminale inférieure sur le vérin central de levage (3).

4. Dispositif de levage selon l'une quelconque des revendications 1 à 3, **caractérisé en ce que** le deuxième élément de traction (11) est un câble ou similaire.

5. Dispositif de levage selon l'une quelconque des revendications 1 à 4, **caractérisé en ce que** le premier élément de traction (6) est fixé dans la zone terminale inférieure à un point de fixation (9) sur le vérin intérieur de levage (4), ce premier élément de traction (6) étant guidé par le premier cylindre d'inversion (7) et y étant dévié d'environ 180° et ce premier élément de traction (6) étant fixé par son autre extrémité à une barre (15) qui est reliée fixement au vérin extérieur de levage (2).

6. Dispositif de levage, de préférence pour lit de malade ou de soins, selon l'une quelconque des revendications 1 à 5, **caractérisé en ce que** le premier élément de traction (6) est une chaîne.

7. Dispositif de levage, de préférence pour lit de malade ou de soins, selon l'une quelconque des revendications 1 à 6, **caractérisé en ce que** le deuxième cylindre d'inversion (10) pour le deuxième élément de traction (11) est disposé à l'extérieur du centre à proximité de la zone circonférentielle du vérin central de levage (3).
